# EUROPEAN PATENT APPLICATION

(11) **EP 3 579 382 A1**
(43) Date of publication of application: **11.12.2019**
(21) Application number: 17894877.4
(22) Date of filing: 31.01.2017
(51) Int. Cl.: H02K 1/27

(54) **AXIAL GAP-TYPE ROTARY ELECTRICAL MACHINE**

(71) Applicant: Hitachi Industrial Equipment Systems Co., Ltd., Tokyo 101-0022 (JP)
(72) Inventor: TAKAHASHI, Shuuichi, Tokyo 101-0022 (JP); YONEOKA, Yasuei, Tokyo 101-0022 (JP); SUZUKI, Toshifumi, Tokyo 101-0022 (JP); TAKAHASHI, Daisaku, Tokyo 101-0022 (JP); KURAI, Daisuke, Tokyo 101-0022 (JP); SAKURAI, Jun, Tokyo 101-0022 (JP); YOSHIDA, Masayuki, Tokyo 101-0022 (JP)
(74) Representative: MERH-IP Matias Erny Reichl Hoffmann Patentanwälte PartG mbB
(86) International application number: PCT/JP2017/003417
(87) International publication number: WO 2018/142469

(57) **Abstract**

This axial gap-type rotary electrical machine has: a stator in which a plurality of core units each configured from a core, a coil, and a bobbin are disposed centering around a rotary shaft, in an annular shape along the inner circumferential surface of a housing; and a rotor that is face-to-face with a cross-sectional surface of the core through a predetermined gap in the radial direction of the rotary shaft. The rotor comprises a rotor base which is provided with a disk-shaped permanent magnet and an end portion gripping the outer circumference of the permanent magnet, and which holds the permanent magnet. The thickness of the end portion of the rotor base decreases toward the stator side. In particular, the end portion of the rotor base is formed in a tapered shape in which the thickness of the end portion decreases toward the stator side. In addition, the end portion of the rotor base is formed such that high portions and low portions are periodically provided over the circumferential direction. Accordingly, the magnetic flux from the stator can be efficiently returned to the rotor, and a high output may be maintained.

## Description

### TECHNICAL FIELD

The present invention relates to an axial gap-type rotary electrical machine.

### BACKGROUND ART

The axial gap-type rotary electrical machine is a machine in which a cylindrical stator and a disk-shaped rotor are disposed to be face-to-face with each other via a predetermined air gap in a radial direction of the rotary shaft. The stator includes a plurality of iron cores disposed to be warped in an inner circumferential direction of a housing portion, and a coil wound around the iron core. In the axial gap-type rotary electrical machine, since a gap surface generating the torque increases in proportion to approximately the square of a diameter thereof, it is considered to be a rotary electrical machine suitable for a high efficiency and a thin shape, compared to a radial gap type of a mechanism with a gap in the radial direction.

In particular, since a double rotor type axial gap-type rotary electrical machine in which a single stator is sandwiched by two rotors can secure a twice gap area, it has attracted attention as a structure capable of obtaining superior characteristics.

The rotor of the axial gap-type rotary electrical machine usually includes a donut-shaped permanent magnet and a member (a rotor base) that holds the permanent magnet.

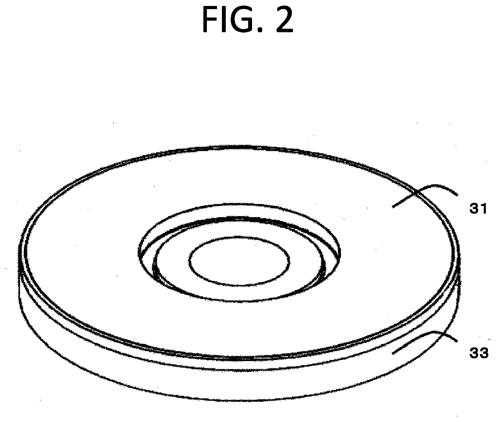

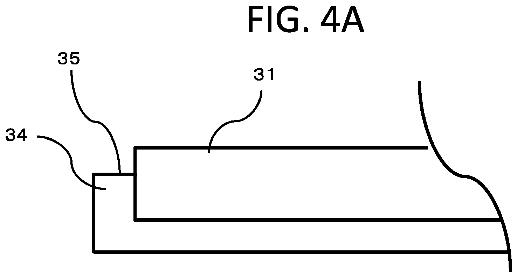

For example, Patent Document 1 illustrates a cross-sectional view in which a permanent magnet 31 is held by a rotor base (Figs. 2(a) and 4(a)).

### CITATION LIST

### PATENT DOCUMENT

Patent Document 1: International Publication No. WO 2015/159332

### SUMMARY OF THE INVENTION

### PROBLEMS TO BE SOLVED BY THE INVENTION

In the above Patent Document 1, an end portion (a portion that grips the magnet at an outer circumference) of the rotor base that holds the permanent magnet 31 presses the permanent magnet 31 at the time of rotation with a constant thickness.

However, due to the influence of IE 3 efficiency regulation in an induction motor, there is a need to further increase the efficiency of the rotary electrical machine.

Therefore, an axial gap-type rotary electrical machine with high efficiency and little loss is desired.

### SOLUTIONS TO PROBLEMS

The axial gap-type rotary electrical machine according to the present invention is preferably an axial gap-type rotary electrical machine including: a stator in which a plurality of core units formed by a core, a coil and a bobbin is arranged annularly along an inner circumferential surface of a housing around a rotary shaft; and a rotor being face-to-face with an end surface of the core via a predetermined gap in a radial direction of the rotary shaft, in which the rotor has a disk-shaped permanent magnet, and a rotor base having an end portion gripped at an outer circumference of the permanent magnet and holding the permanent magnet, and a thickness of the end portion of the rotor base is thin toward the stator side.

### EFFECTS OF THE INVENTION

According to the present invention, it is possible to provide an axial gap-type rotary electrical machine which can efficiently circulate the magnetic flux from the stator to the rotor and keep the output high.

### BRIEF DESCRIPTION OF THE DRAWINGS

Fig. 1A is a schematic configuration diagram of an axial gap-type rotary electrical machine according to a first embodiment (part 1).
Fig. 1B is a schematic configuration diagram of the axial gap-type rotary electrical machine according to the first embodiment (part 2).
Fig. 2 is a perspective view of a rotor of a general axial gap-type rotary electrical machine.
Fig. 3 is a perspective view illustrating an arrangement example of a permanent magnet in a rotor.
Fig. 4A is an enlarged view of a main part of a cross section of a rotor of an axial gap-type rotary electrical machine according to a related art (part 1).
Fig. 4B is an enlarged view of a main part of a cross section of a rotor of an axial gap-type rotary electrical machine according to the related art (part 2).
Fig. 5 is a cross-sectional view illustrating a state of a magnetic flux from a permanent magnet of a rotor.
Fig. 6A is a cross-sectional view illustrating a shape of an end portion of a rotor base according to the first embodiment (a tapered shape, part 1).
Fig. 6B is a cross-sectional view illustrating a shape of the end portion of the rotor base according to the first embodiment (a tapered shape, part 2).
Fig. 7A is a cross-sectional view illustrating a shape of the end portion of the rotor base according to the first embodiment (a tapered shape, part 3).
Fig. 7B is a cross-sectional view illustrating a shape of the end portion of the rotor base according to the first embodiment (a tapered shape, part 4).
Fig. 8A is a cross-sectional view illustrating a shape of the end portion of the rotor base according to the first embodiment (a staircase shape, part 1).
Fig. 8B is a cross-sectional view illustrating a shape of the end portion of the rotor base according to the first embodiment (a staircase shape, part 2).
Fig. 9A is a cross-sectional view illustrating a shape of the end portion of the rotor base according to the first embodiment (a staircase shape, part 3).
Fig. 9B is a cross-sectional view illustrating a shape of the end portion of the rotor base according to the first embodiment (a staircase shape, part 4).
Fig. 10A is a cross-sectional view illustrating a shape of the end portion of the rotor base according to the first embodiment (a comb shape, part 1).
Fig. 10B is a cross-sectional view illustrating a shape of the end portion of the rotor base according to the first embodiment (a comb shape, part 2).
Fig. 11A is a cross-sectional view illustrating a shape of the end portion of the rotor base according to the first embodiment (an R face shape, part 1).
Fig. 11B is a cross-sectional view illustrating a shape of the end portion of the rotor base according to the first embodiment (an R face shape, part 2).
Fig. 12A is a side view of a rotor illustrating a shape of an end portion of a rotor base according to a second embodiment (part 1).
Fig. 12B is a side view of the rotor illustrating a shape of the end portion of the rotor base according to the second embodiment (part 2).
Fig. 12C is a side view of the rotor illustrating a shape of the end portion of the rotor base according to the second embodiment (part 3).

### MODE FOR CARRYING OUT THE INVENTION

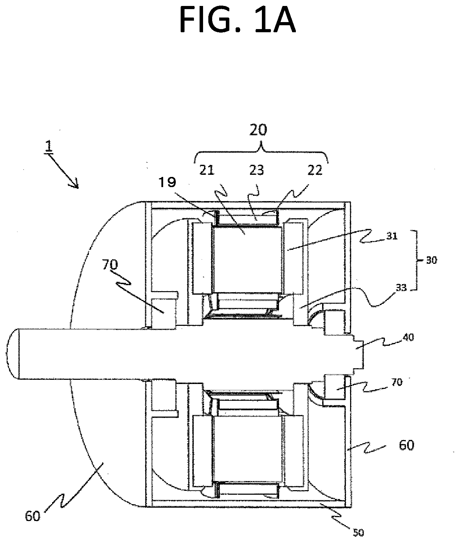

Hereinafter, each embodiment to which the present invention is applied will be described with reference to Figs. 1A to 12C.

### First Embodiment

Hereinafter, a first embodiment to which the present invention is applied will be described with reference to Figs. 1A to 11B.

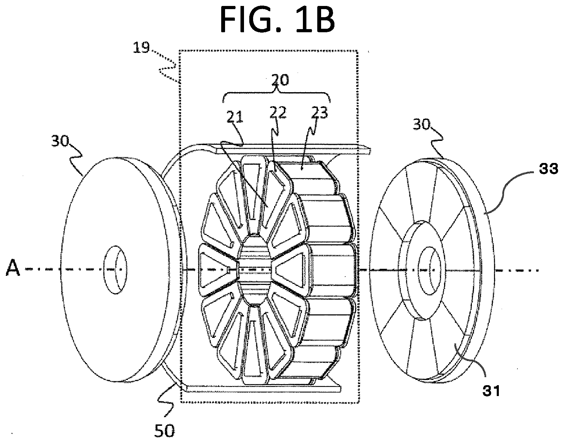

First, an overall configuration of an axial gap-type rotary electrical machine according to the first embodiment will be described with reference to Figs. 1A and 1B.

The cross-sectional view of Fig. 1A illustrates a schematic configuration of a double rotor type axial gap-type permanent magnet synchronous motor 1 (hereinafter, in some cases, referred to simply as a "motor 1") according to the first embodiment.

As illustrated in Fig. 1A, in the motor 1, two disk-shaped rotors 30 are disposed to be face-to-face with each other so that a donut-shaped stator 19 disposed along an inner circumferential surface of a housing 50 is interposed via a predetermined air gap in a radial direction of a rotary shaft.

In a rotor 30, a center of a disk is fixed to a rotary shaft 40. Further, the rotary shaft 40 is disposed to penetrate a central portion of a stator 19, and both end portions thereof are rotatably fixed to an end bracket 60 via a bearing 70. Further, the end bracket 60 is fixed to the vicinity of both open end portions of the substantially cylindrical housing 50.

Furthermore, the rotor 30 has a structure in which a circular rotor base 33 is provided with a permanent magnet 31, and the rotor base 33 holds the permanent magnet 31. The permanent magnet 31 is made up of a plurality of flat platelike magnets having a substantially sectorial shape centered on a direction of the rotary shaft 40, and magnets of different polarities are arranged in the rotating direction. Further, ferrite is applied as the permanent magnet 31, but it is not limited thereto.

An armature configuration of the motor 1 is as illustrated in the perspective view of Fig. 1B. The stator 19 includes twelve core units 20 arranged along the inner circumference of the housing 50 with a rotation axis A as a center direction. The single core unit 20 constitutes one slot. In addition, the core units 20 and the inner circumferential surface of the housing 50 are molded integrally with each other by resin molding, and are fixed to the stator.

Next, the configuration of the rotor will be described with reference to Fig. 2.

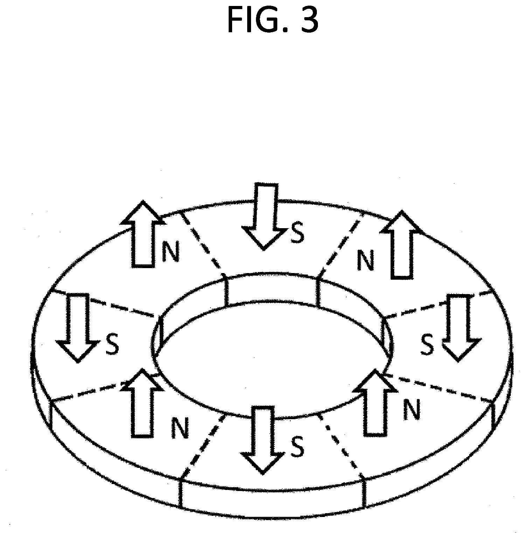

As illustrated in Fig. 2, the rotor 30 includes a permanent magnet 31, and a tubular rotor base 33 that holds the permanent magnet 31. The rotor base 33 is usually a magnetic body containing iron as a main constituent. The permanent magnet 31 is a ring-shaped circular plate, and as illustrated in Fig. 3, an N pole and an S pole intersect each other and are magnetized parallel to an axial direction. Here, the permanent magnet 31 and the core 21 of the core unit 20 of the stator 19 are configured to be face-to-face with each other in the direction of the rotary shaft, and be face-to-face with each other across an air gap. This is why it is referred to as an "axial gap-type". Further, in this embodiment, the configuration of the axial gap-type rotary electrical machine having one stator 19 and two rotors 30 is taken as an example, but the embodiment can also be applied to a combination of one stator 19 and one rotor 30, and a combination of one rotor 30 and two stators 19. The core unit 20 of the stator 19 has a fan section and includes a bobbin 22 that holds the core 21 and a coil 23. However, since the output torque of the axial gap rotary electrical machine is related to a dimension of a facing area between the rotor magnet and the stator core, it is desirable to increase the area as much as possible. Also, since the output torque is also related to a facing distance (a gap length) between the rotor magnet and the stator iron core, the short gap length is preferable.

Next, the axial gap-type rotary electrical machine according to the related art will be described referring to Figs. 4A to 5.

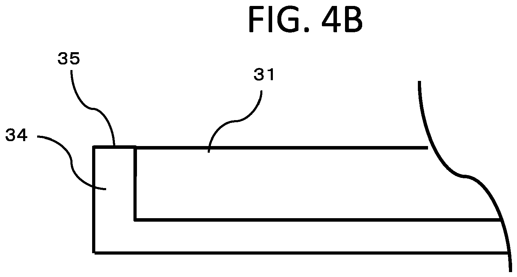

An end portion 34 of the outer circumference of the rotor base 33 in the rotor 30 of the axial gap-type rotary electrical machine according to related art has a shape as illustrated in Figs. 4A and 4B, and the end portion 34 having a constant width holds the permanent magnet 31. Further, Fig. 4A illustrates an example in which an end portion upper end 35 does not reach the upper end surface of the permanent magnet 31, and Fig. 4B is an example in which the end portion upper end 35 reaches the upper end surface of the permanent magnet 31.

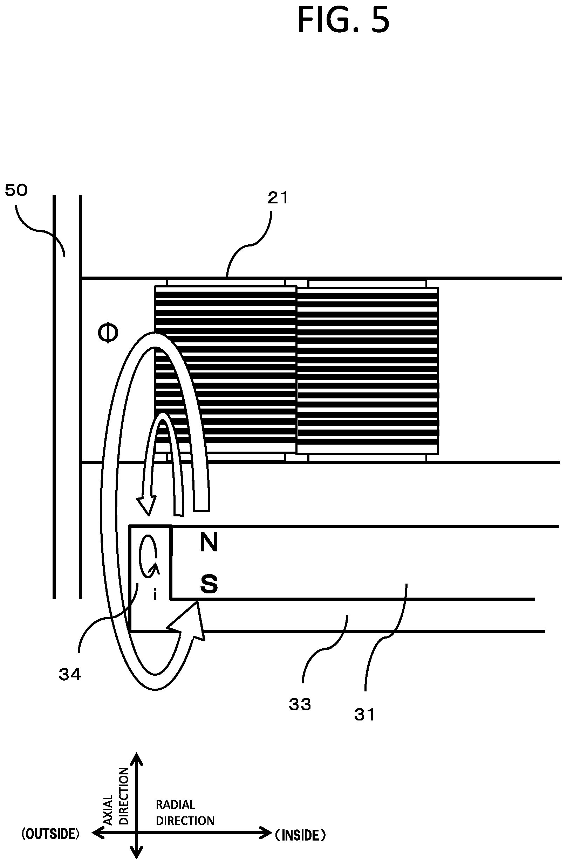

As illustrated in Fig. 5, a magnetic flux Φ from the permanent magnet 31 of the rotor 30 forms a circulation flow path of magnetic flux Φ such that a N pole of the permanent magnet 31 of the rotor 30 reaches an S pole. Further, the principle of the axial gap-type rotary electrical machine is to energize the coil 23 wound around the core 21 in the core unit 20 of the stator 19 to switch the magnetic poles of the core 21 between the N pole and the S pole, thereby causing the attractive force and the repulsive force between the stator 19 and the permanent magnet 31 on the rotor 30 side to rotate the rotor 30.

Here, since the end portion 34 of the outer circumference of the rotor base 33, which is a magnetic body, has a certain thickness, the magnetic flux Φ from the permanent magnet 31 has a problem that a short circuit of the magnetic flux occurs and the efficiency of the rotary electrical machine decreases. In addition, an eddy current i is generated at the end portion 34 of the outer circumference the rotor base 33, and there is a problem that the efficiency of the rotary electrical machine decreases due to the eddy current loss.

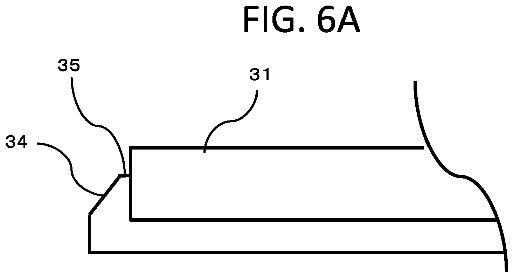

Next, the shape of the end portion of the rotor base according to the first embodiment will be described with reference to Figs. 6A to 11B.

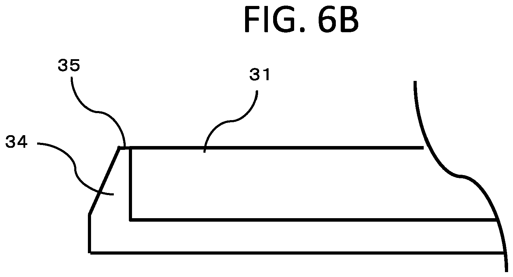

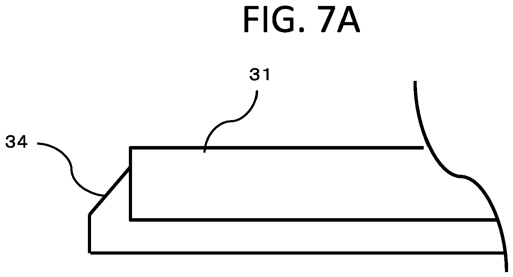

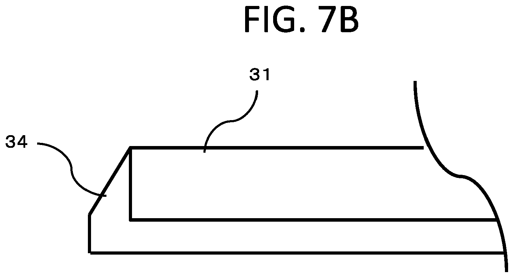

In the present embodiment, in order to solve the problem of decrease in the efficiency of the rotary electrical machine in the related art, as illustrated in Figs. 6A and 6B, the end portion 34 of the outer circumference of the rotor base 33 has a tapered shape in which the side of the stator 19 is made thinner. Fig. 6A illustrates an example in which the end portion upper end 35 does not reach the upper end surface of the permanent magnet 31, and Fig. 6B is an example in which the end portion upper end 35 reaches the upper end surface of the permanent magnet 31. Further, as illustrated in Figs. 7A and 7B, a shape having no end portion upper end 35 may be used.

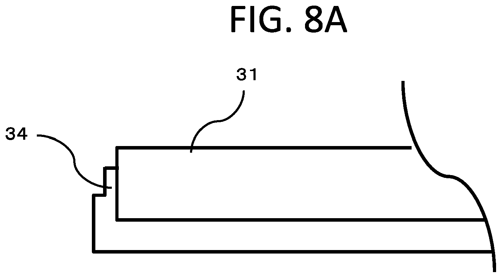

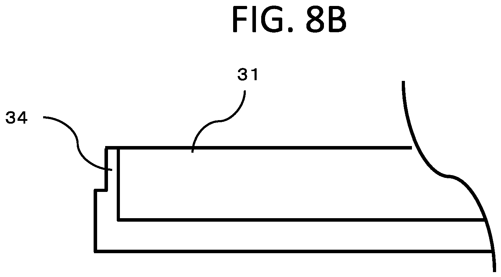

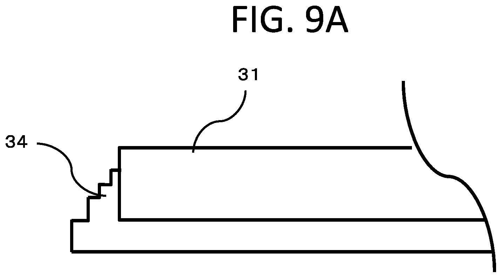

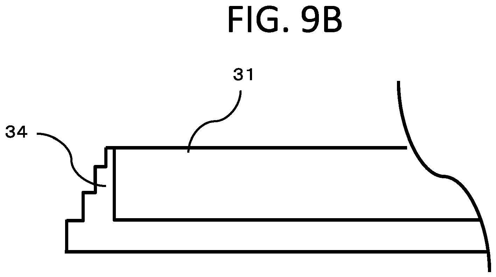

Further, as illustrated in Figs. 8A and 8B, the end portion 34 may form a small step on the side of the stator 19 to have a staircase shape of two steps, or as illustrated in Figs. 9A and 9B, the end portion 34 may form a small step on the side of the stator 19 to have a staircase shape having a further number of steps.

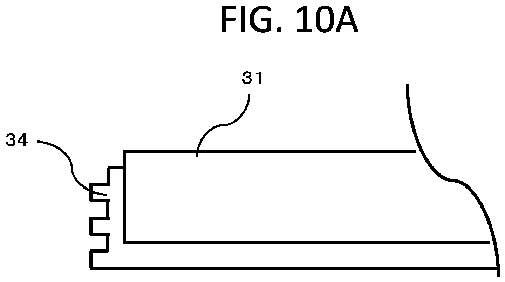

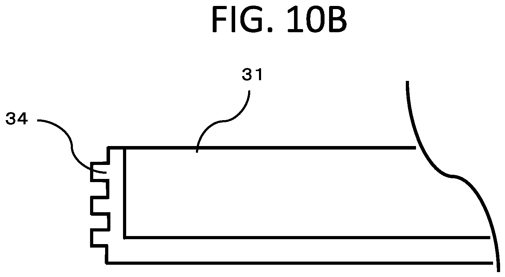

In addition, as illustrated in Figs. 10A and 10B, the end portion 34 may have a comb-like shape.

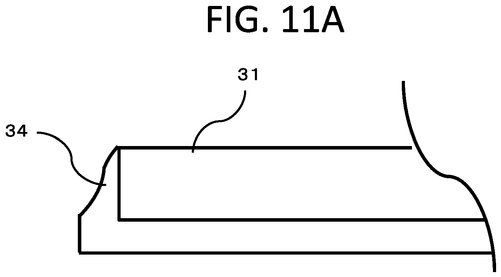

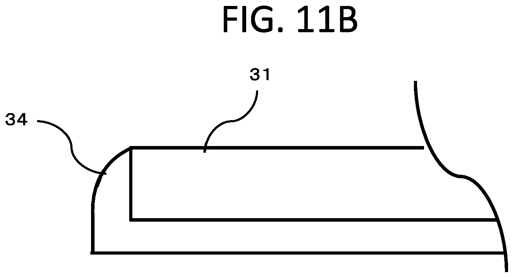

Further, as illustrated in Figs. 11A and 11B, the end portion 34 may be a round (R) surface. Fig. 11A illustrates a case where a downward convex R surface is formed, and Fig. 11B illustrates a case where an upward convex R surface is formed.

As described above, according to the present embodiment, by forming the radial thickness of the end portion 34 of the outer circumference of the rotor base 33 so as to be thinner toward the stator, the rotor base 33 firmly holds the permanent magnet 31, and a phenomenon that a flow of the magnetic flux Φ from the permanent magnet 31 is short-circuited by the end portion 34 or an eddy current is generated is alleviated, thereby preventing a decrease in the efficiency of the rotary electrical machine.

### Second Embodiment

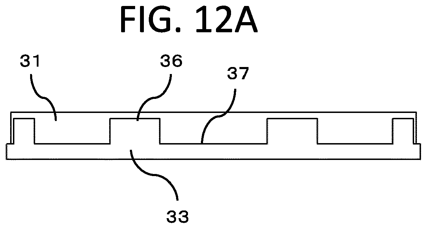

Hereinafter, a second embodiment to which the present invention is applied will be described with reference to Figs. 12A to 12C.

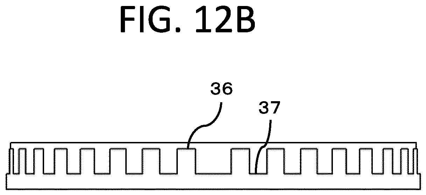

In this embodiment, as one of the features, the end portion 34 of the rotor base 33 has a configuration in which a high portion 36 and a low portion 37 are alternately provided as illustrated in Figs. 12A and 12B. As a result, as compared with a case where all the end portions 34 are set to a uniform height, the rotor base 33 firmly grips the permanent magnets 31, and a phenomenon in which the flow of the magnetic flux Φ from the permanent magnet 31 is short-circuited by the end portion 34 or eddy currents are generated is alleviated, thereby preventing a decrease in efficiency of the rotary electrical machine. Here, Figs. 12A and 12B illustrate examples in which a width and an interval of the high portion 36 and the low portion 37 are different from each other.

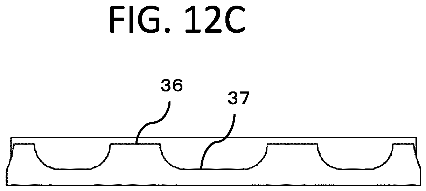

Also, as illustrated in Fig. 12C, the low portion 37 of the end portion 34 of the rotor base 33 may be formed to draw a gentle curve.

### REFERENCE SIGNS LIST

- 1: Motor
- 19: Stator
- 20: Core unit
- 21: Core
- 22: Bobbin
- 23: Coil
- 30: Rotor
- 31: Permanent magnet
- 33: Rotor base
- 34: End portion
- 35: End portion upper end
- 36: High portion
- 37: Low portion
- 40: Rotary shaft
- 50: Housing
- 60: End bracket
- 70: Bearing

## Claims

1. An axial gap-type rotary electrical machine comprising: a stator in which a plurality of core units formed by a core, a coil and a bobbin is arranged annularly along an inner circumferential surface of a housing around a rotary shaft; and a rotor being face-to-face with an end surface of the core via a predetermined gap in a radial direction of the rotary shaft,
wherein the rotor has a disk-shaped permanent magnet, and a rotor base having an end portion gripped at an outer circumference of the permanent magnet and holding the permanent magnet, and
a thickness of the end portion of the rotor base is thin toward the stator side.

2. The axial gap-type rotary electrical machine according to claim 1, wherein an upper end of the end portion of the rotor base reaches an upper end surface of the permanent magnet.

3. The axial gap-type rotary electrical machine according to claim 1, wherein the upper end of the end portion of the rotor base does not reach the upper end surface of the permanent magnet.

4. The axial gap-type rotary electrical machine according to claim 1, wherein the end portion of the rotor base has a tapered shape in which a thickness of the end portion of the rotor base is thin toward the stator side.

5. The axial gap-type rotary electrical machine according to claim 1, wherein the end portion of the rotor base forms a staircase shape having a small step on the stator side.

6. The axial gap-type rotary electrical machine according to claim 1, wherein the end portion of the rotor base has a shape in which the thickness periodically decreases.

7. The axial gap-type rotary electrical machine according to claim 1, wherein the end portion of the rotor base has a round shape in which the thickness of the end portion of the rotor base is thin toward the stator side.

8. The axial gap-type rotary electrical machine according to claim 1, wherein a high portion and a low portion periodically appear at the end portion of the rotor base in a circumferential direction.

9. The axial gap-type rotary electrical machine according to claim 8, wherein the lower portion of the end portion of the rotor base is formed in a curve shape.
